(19) Europäisches Patentamt
European Patent Office
Office européen des brevets

(11) EP 3 328 902 B1

(12) # EUROPÄISCHE PATENTSCHRIFT

(45) Veröffentlichungstag und Bekanntmachung des Hinweises auf die Patenterteilung:
**13.10.2021 Patentblatt 2021/41**

(21) Anmeldenummer: **16744726.7**

(22) Anmeldetag: **26.07.2016**

(51) Int Cl.:
***C08F 2/22*** *(2006.01)*
***C08F 212/08*** *(2006.01)*
***C08F 257/02*** *(2006.01)*
***D21H 27/08*** *(2006.01)*
***C08F 226/06*** *(2006.01)*
***C08F 220/56*** *(2006.01)*
***C08F 220/06*** *(2006.01)*
***D21H 17/34*** *(2006.01)*
***D21H 17/46*** *(2006.01)*
***D21H 19/20*** *(2006.01)*
***D21H 19/24*** *(2006.01)*
***D21H 19/56*** *(2006.01)*
***D21H 19/62*** *(2006.01)*
***D21H 21/18*** *(2006.01)*

(86) Internationale Anmeldenummer:
**PCT/EP2016/067767**

(87) Internationale Veröffentlichungsnummer:
**WO 2017/017090 (02.02.2017 Gazette 2017/05)**

(54) **WÄSSRIGE DISPERSION EINES OXAZOLINGRUPPENHALTIGEN POLYMERS**

AQUEOUS DISPERSION OF AN OXAZOLINE GROUP-CONTAINING POLYMER

DISPERSION AQUEUSE D'UN POLYMÈRE CONTENANT DES GROUPES OXAZOLINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2015 EP 15178810**

(43) Veröffentlichungstag der Anmeldung:
**06.06.2018 Patentblatt 2018/23**

(73) Patentinhaber: **BASF SE**
**67056 Ludwigshafen am Rhein (DE)**

(72) Erfinder:
- **ZORN, Matthias**
**64646 Heppenheim (DE)**
- **MICHL, Kathrin**
**67063 Ludwigshafen (DE)**
- **BRAND, Christian**
**67310 Hettenleidelheim (DE)**

(74) Vertreter: **BASF IP Association**
**BASF SE**
**G-FLP-C006**
**67056 Ludwigshafen (DE)**

(56) Entgegenhaltungen:
**EP-A1- 0 176 609**

EP 3 328 902 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der vorliegenden Erfindung ist Verfahren zur Herstellung einer wässrigen Polymerdispersion durch radikalisch initiierte wässrige Emulsionspolymerisation, wobei in einem wässrigen Polymerisationsmedium

a) in einer ersten Polymerisationsstufe

≥ 0,1 und ≤ 15 Gew.-% wenigstens einer a,β-monoethylenisch ungesättigten Verbindung mit wenigstens einer Säuregruppe (Monomere A1),
> 0 und ≤ 10 Gew.-% wenigstens einer monoethylenisch ungesättigten Verbindung mit wenigstens einer Carbonsäureamidgruppe (Monomere A2),
≥ 75 und ≤ 99,9 Gew.-% wenigstens einer ethylenisch ungesättigten Verbindung, welche sich von den Monomeren A1, A2 und B1 unterscheidet (Monomere A3),

wobei sich die Mengen der Monomeren A1 bis A3 auf 100 Gew.-% aufsummieren, radikalisch zu einem Polymer A polymerisiert werden, danach in Anwesenheit des Polymers A

b) in einer zweiten Polymerisationsstufe

≥ 0,1 und ≤ 20 Gew.-% wenigstens einer monoethylenisch ungesättigten Verbindung mit wenigstens einer Oxazolingruppe (Monomere B1),
> 0 und ≤ 10 Gew.-% wenigstens einer monoethylenisch ungesättigten Verbindung mit wenigstens einer Carbonsäureamidgruppe (Monomere B2),
≥ 70 und ≤ 99,9 Gew.-% wenigstens einer ethylenisch ungesättigten Verbindung, welche sich von den Monomeren A1, B1 und B2 unterscheidet (Monomere B3),

wobei sich die Mengen der Monomeren B1 bis B3 auf 100 Gew.-% aufsummieren, radikalisch polymerisiert werden, mit der Maßgabe, dass

- das Gewichtsverhältnis der Summe der Gesamtmengen an Monomeren A1 bis A3 (Gesamtmonomerenmenge A) zur Summe der Gesamtmengen an Monomeren B1 bis B3 (Gesamtmonomerenmenge B) im Bereich 1:9 bis 9:1 liegt,
- der pH-Wert des wässrigen Polymerisationsgemisches während der ersten Polymerisationsstufe < 5 beträgt und danach
- vor Beginn der zweiten Polymerisationsstufe der pH-Wert des wässrigen Polymerisationsgemisches durch Zugabe einer Base auf einen Wert > 6 erhöht wird,

welches dadurch gekennzeichnet ist, dass die Summe der Gesamtmengen an Monomeren A2 und Monomeren B2 ≥ 0,1 und ≤ 10 Gew.-%, bezogen auf die Summe aus Gesamtmonomerenmenge A und Gesamtmonomerenmenge B (Gesamtmonomerenmenge) beträgt.

Gegenstand der Erfindung sind ebenfalls die nach dem erfindungsgemäßen Verfahren zugänglichen wässrigen Polymerdispersionen selbst sowie insbesondere deren Verwendung, insbesondere zur Verbesserung der Reißfestigkeit sowie zur Erhöhung des Berstdruckes bei Filterpapieren unter nassen Bedingungen.

Wässrige Polymerdispersionen, deren Polymer aus der ersten Polymerisationsstufe ein Säuremonomer und deren Polymer aus der zweiten Polymerisationsstufe ein oxazolingruppenhaltiges Monomer in einpolymerisierter Form enthalten, Verfahren zu deren Herstellung sowie deren vernetzende Eigenschaften sind aus dem Stand der Technik bekannt.

So offenbart die EP-A 176609 zweistufige selbstvernetzende Polymere, welche in der ersten Polymerisationsstufe ein Monomer mit einem aktiven Wasserstoffatom und in der zweiten Polymerisationsstufe ein oxazolingruppenhaltiges Monomer in einpolymerisierter Form enthalten sowie deren Verwendung in einer Reihe von Anwendungen, wie beispielsweise zur Herstellung von Filmen, Klebstoffen, Bindemittel für Vliesstoffe etc. Als Monomere mit aktiven Wasserstoffatomen werden allgemein Monomere mit einer schwachen oder starken Säuregruppe, mit einem hydroxygruppenhaltigen aliphatischen Rest, mit einem hydroxygruppenhaltigen aromatischen Rest oder mit einer Amidgruppe verstanden, wobei jedoch die Monomere mit einer Säuregruppe oder einem hydroxygruppenhaltigen aromatischen Rest als bevorzugt und Monomere mit einer Säuregruppe als besonders bevorzugt offenbart werden. Auch werden in allen Beispielen ausschließlich säuregruppenhaltige Monomere, wie insbesondere Acrylsäure, aber auch Fumarsäure als Monomere mit einem aktiven Wasserstoffatom zur Herstellung der ersten Polymerstufe eingesetzt. Die selbstvernetzenden Eigenschaften der entsprechenden Dispersionspolymere wurden durch die Messung der Zugfestigkeit und der Reißdehnung der aus den Dispersionspolymeren hergestellten Polymerfilme bestimmt.

In der EP-A 489941 werden Beschichtungsformulierungen offenbart, welche neben einem Pigment, einem Pigmentträger, einem Verdicker, einem Entschäumer, einem Benetzungsmittel, einem Dispergiermittel und einem Biozid noch eine wässrige Dispersion selbstvernetzenden Zweistufenpolymeren enthalten, wobei das Zweistufenpolymere in der ersten Polymerisationsstufe 0,5 bis 6 Gew.-% eines Carbonsäuremonomeren und in der zweiten Polymerisationsstufe 0,25 bis 5 Gew.-% eines oxazolingruppenhaltigen Monomeren, jeweils bezogen auf die Gesamtmonomerenmenge des Zweistufenpolymeren, in einpolymerisierter Form enthält.

Gemäß der anonymen Research Disclosure Publikation 1986, 261, 23, wird ganz allgemein die Verwendung von Polymeren, welche Isopropenyl-2-oxazolin und wenigstens weiteres Monomer, das wenigstens eine Carbonyl-, Anhydrid- oder Epoxygruppe aufweist, in einpolymerisierter Form enthalten, zur Herstellung von Vliesstoffen offenbart.

Auch die WO 2006/112538 offenbart u.a. zweistufige selbstvernetzende Polymere, welche in der ersten Polymerisationsstufe ein Monomer, welches eine, gegenüber einer Oxazolingruppe reaktive funktionelle Gruppe aufweist und in der zweiten Polymerisationsstufe ein oxazolingruppenhaltiges Monomer in einpolymerisierter Form enthalten sowie deren Verwendung in einer Reihe von Anwendungen, wie beispielsweise zur Herstellung von Beschichtungsmaterialien, Oberflächenbehandlungsmitteln, Klebstoffen oder Dichtstoffen etc. Als funktionelle Gruppen, welche gegenüber einer Oxazolingruppe reaktiv sind, werden explizit die Carboxylgruppe, aromatische Thiole und phenolische Hydroxygruppen genannt, wobei die Carboxylgruppe besonders bevorzugt sind. In den Beispielen wird jedoch lediglich Acrylsäure als carboxylgruppenhaltiges Monomer eingesetzt.

Aufgabe der vorliegenden Erfindung war es, ein Verfahren zur Herstellung einer wässrigen Polymerdispersion zur Verfügung zu stellen, deren selbstvernetzende wässrige Polymerdispersion als Bindemittel zu einer Verbesserung der Reißfestigkeit sowie zu einer Erhöhung des Berstdruckes bei Filterpapieren unter nassen Bedingungen führt.

Die Aufgabe wurde durch die gemäß dem eingangs definierten Verfahren zugänglichen wässrigen Polymerdispersionen gelöst.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich das erfindungsgemäße Verfahren lediglich dadurch, dass es zweistufig unter Einhaltung der genannten Rahmenparameter sowie der spezifischen Monomerenzusammensetzungen durchgeführt wird.

Zur Herstellung der mit dem erfindungsgemäßen Verfahren zugänglichen wässrigen Polymerdispersionen durch zweistufige wässrige Emulsionspolymerisation können nachfolgende ethylenisch ungesättigte Monomere A1, A2, A3, B1, B2 und B3 eingesetzt werden.

Als Monomere A1 kommen alle a,β-monoethylenisch ungesättigten Verbindungen in Betracht, welche wenigstens eine Carbonsäure- und/oder Phosphorsäuregruppe aufweisen. Als α,β-monoethylenisch ungesättigten Verbindungen, welche wenigstens eine Carbonsäuregruppe aufweisen kommen $C_3$- bis $C_6$-, bevorzugt $C_3$- oder $C_4$-Mono- oder Dicarbonsäuren in Betracht, wie beispielsweise Acrylsäure, Methacrylsäure, Ethylacrylsäure, Itaconsäure, Allylessigsäure, Crotonsäure, Vinylessigsäure, Vinylmilchsäure, Fumarsäure, Maleinsäure, 2-Methylmaleinsäure. Die Monomeren A1 umfassen aber auch die Anhydride entsprechender a,β-monoethylenisch ungesättigter Dicarbonsäuren, wie beispielsweise Maleinsäureanhydrid oder 2-Methylmaleinsäureanhydrid. Bevorzugt sind die carbonsäuregruppenaufweisenden Monomeren A1 ausgewählt aus der Gruppe umfassend Acrylsäure, Methacrylsäure, Itaconsäure, Crotonsäure, Fumarsäure, Maleinsäure, Vinylessigsäure und Vinylmilchsäure, wobei Acrylsäure und/oder Methacrylsäure besonders bevorzugt sind. Als a,β-monoethylenisch ungesättigten Verbindungen, welche wenigstens eine Phosphorsäuregruppe aufweisen kommen insbesondere Vinylphosphonsäure und/oder (Meth)acryloxy(poly)alkoxyphosphat in Betracht, wobei das (Meth)acryloxy(poly)alkoxyphosphat folgende Formel I aufweist:

$H_2C=CH(H, CH_3)-C(=O)-[AO]_x-O-P(=O)(-OH)_2$, Formel (I)

wobei

AO: für eine Ethylenoxy- $[-OCH_2CH_2-]$, eine Propylenoxy- $[-OCH_2CH(CH_3)-]$, eine Butylenoxygruppe $[-OCH_2CH(C_2H_5)-]$ oder Gemische davon steht, wobei die Ethylenoxygruppe bevorzugt ist, und

x: für eine Zahl zwischen 1 und 30 steht, wobei Zahlen zwischen 1 und 20 bevorzugt und Zahlen zwischen 1 und 10 ganz besonders bevorzugt sind.

Als (Meth)acryloxy(poly)alkoxyphosphate explizit genannt seien Verbindungen der folgenden Formeln:

$H_2C=C(CH_3)-C(=O)-[OCH_2CH_2]_{8-10}-O-P(=O)(-OH)_2$
$H_2C=C(CH_3)-C(=O)-[OCH_2CH(CH_3)]_{8-10}-O-P(=O)(-OH)_2$
$H_2C=C(CH_3)-C(=O)-OCH_2CH_2-O-P(=O)(-OH)_2$
$H_2C=CH-C(=O)-[OCH_2CH(CH_3)]_{8-10}-O-P(=O)(-OH)_2$

Vorgenannte (Meth)acryloxy(poly)alkoxyphosphate sind im Handel erhältlich, beispielsweise als Sipomer® PAM 100, Sipomer® PAM 200, Sipomer® PAM 300 oder Sipomer® PAM 4000 der Firma Solvay/Rhodia.

Selbstverständlich umfassen die Monomeren A1 auch die voll- oder teilneutralisierten wasserlöslichen Salze, insbesondere die Alkalimetall- oder Ammoniumsalze, der vorgenannten Säuren.

Mit Vorteil werden als Monomeren A1 Acrylsäure, Methacrylsäure, Itaconsäure, Maleinsäure, Fumarsäure, Crotonsäure, Vinylessigsäure, Vinylmilchsäure, Vinylphosphonsäure und/oder (Meth)acryloxy(poly)alkoxyphosphat, wie insbesondere Sipomer® PAM 100, Sipomer® PAM 200, Sipomer® PAM 300 oder Sipomer® PAM 4000, eingesetzt.

Als Monomere A2 und/oder B2 können alle monoethylenisch ungesättigte Verbindungen eingesetzt werden, welche wenigstens eine Carbonsäureamidgruppe aufweisen. Hierzu zählen vor allem die Amidderivate der carbonsäuregruppenhaltigen Monomeren A1, wie insbesondere (Meth)acrylsäureamid, Crotonsäureamid oder Amide von Dicarbonsäuren, z.B. Itaconsäurediamid, Maleinsäurediamid oder Fumarsäurediamid. Als Monomeren A2 und/oder B2 besonders bevorzugt sind Methacrylsäureamid und/oder Acrylsäureamid, wobei Methacrylsäureamid ganz besonders bevorzugt ist.

Bei den Monomeren B1 handelt es sich um monoethylenisch ungesättigte Verbindungen mit wenigstens einer Oxazolingruppe. Im Sinne der vorliegenden Erfindung bezeichnet eine Oxazolingruppe eine heterozyklische Verbindung, welche einen fünfgliedrigen Ring umfassend genau ein Sauerstoffatom und genau ein Stickstoffatom umfasst. Insbesondere handelt es sich bei der Oxazolin-Gruppe um eine 2-Oxazolin-Gruppe, welche durch das folgende Strukturelement beschrieben werden kann.

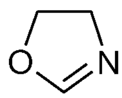

Bevorzugt sind die Monomeren B1 ausgewählt aus Verbindungen der allgemeinen Formel II:

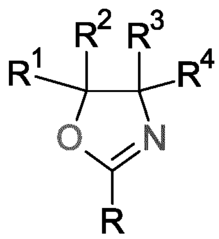

Formel (II)

wobei die Reste die folgenden Bedeutungen haben:

R ist ein $C_{2-20}$-Alkenylrest mit einer ethylenisch ungesättigten Gruppe;

$R^1, R^2, R^3, R^4$ sind unabhängig voneinander ausgewählt aus H, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl, bevorzugt ausgewählt aus H, Halogen und $C_{1-20}$-Alkyl.

Dabei bezeichnet im vorliegenden Fall der Begriff ‚ethylenisch ungesättigte Gruppe' eine endständige C=C-Doppelbindung.

Der Begriff ‚Alkyl' bezeichnet einen univalenten Rest bestehend aus einer linearen, verzweigten oder cyclischen Kohlenwasserstoffgruppe, bevorzugt aus einer linearen oder verzweigten Kohlenwasserstoffkette, insbesondere umfassend 1 bis 20 Kohlenstoffatome, bevorzugt 1 bis 18 Kohlenstoffatome, besonders bevorzugt 1 bis 12 Kohlenstoffatome. Beispielsweise kann es sich bei dem Alkylrest um Methyl, Ethyl, n-Propyl oder iso-Propyl handeln.

Der Begriff ‚Alkenyl' bezeichnet einen univalenten Rest bestehend aus einer linearen oder verzweigten Kohlenwasserstoffkette, insbesondere umfassend 2 bis 20 Kohlenstoffatome, bevorzugt 2 bis 18 Kohlenstoffatome, besonders bevorzugt 2 bis 12 Kohlenstoffatome, welche eine oder mehrere C=C-Doppelbindungen umfasst, wobei die C=C-Doppelbindungen innerhalb der Kohlenwasserstoffkette oder am Ende der Kohlenwasserstoffkette (endständige C=C-Doppelbindung) auftreten können. Beispielsweise kann es sich bei einem Alkenyl-Rest um einen Allyl-Rest handeln.

Der Begriff ‚Aryl' bezeichnet eine substituierte oder unsubstituierte aromatische Kohlenwasserstoff-Gruppe, insbesondere umfassend 6 bis 20 Kohlenstoffatome. Vorzugsweise handelt es sich bei dem Arylrest um eine Phenylgruppe.

Der Begriff ‚Arylalkyl' bezeichnet einen univalenten Rest abgeleitet von einem linearen oder verzweigten Alkylrest, insbesondere umfassend 1 bis 20 Kohlenstoffatome, bevorzugt 2 bis 18 Kohlenstoffatome, besonders bevorzugt 2 bis 12 Kohlenstoffatome, durch den Austausch eines oder mehrerer Wasserstoffatome durch eine Arylgruppe, wobei die Arylgruppe eine substituierte oder unsubstituierte aromatische Kohlenwasserstoff-Gruppe, insbesondere umfassend 6 bis 14 Kohlenstoffatome, ist. Bevorzugt handelt es sich bei der aromatische KohlenwasserstoffGruppe um Phenyl und bei dem Arylalkyl-Rest um einen Benzyl-Rest.

Der Begriff ‚Halogen' bezeichnet einen Substituenten ausgewählt aus Fluor, Chlor, Brom oder Iod, bevorzugt Chlor.

Der Begriff ‚Haloalkyl' bezeichnet einen univalenten Rest abgeleitet von einem linearen oder verzweigten Alkylrest, insbesondere umfassend 2 bis 20 Kohlenstoffatome, bevorzugt 2 bis 18 Kohlenstoffatome, besonders bevorzugt 2 bis 12 Kohlenstoffatome, bei dem ein oder mehrere Wasserstoffatome durch ein Halogenatom (-F, -Cl, -Br, -I, insbesondere Cl) ersetzt sind. Entsprechendes gilt für die Reste Hydroxyalkyl und Aminoalkyl, wo ein oder mehrere Wasserstoffatome durch eine Hydroxy- bzw. Aminogruppe ersetzt sind.

Bevorzugt ist R ein $C_{1-10}$-Alkenylrest, bevorzugt ein $C_{1-6}$-Alkenylrest, umfassend mindestens eine ethylenisch ungesättigte Gruppe. In einer bevorzugten Ausführungsform umfasst der Rest R genau eine ethylenisch ungesättigte Gruppe. Der Rest R ist insbesondere ausgewählt aus Vinyl, Allyl, Isopropenyl (2-Propen-2-yl), 2-Propen-1-yl, 3-Buten-1-yl, oder 4-Buten-1-yl. Insbesondere bevorzugt ist R Vinyl oder Isopropenyl, besonders bevorzugt Isopropenyl.

Bevorzugt sind die Reste $R^1$, $R^2$, $R^3$ und $R^4$ unabhängig voneinander ausgewählt aus H (steht für Wasserstoffatom), Halogen, $C_{1-10}$-Alkyl, $C_{6-12}$-Aryl, $C_{7-13}$-Arylalkyl, $C_{1-10}$-Alkoxy, $C_{1-10}$-Hydroxyalkyl, $C_{1-10}$-Aminoalkyl und $C_{1-10}$-Haloalkyl; insbesondere ausgewählt aus H und $C_{1-6}$-Alkyl, besonders bevorzugt aus H, Methyl, Ethyl, n-Propyl, iso-Propyl, n-Butyl, n-Pentyl und n-Hexyl, insbesondere ausgewählt aus H, Methyl und Ethyl. In einer bevorzugten Ausführungsform handelt es sich bei mindestens zwei der Reste $R^1$, $R^2$, $R^3$ und $R^4$ um H. In einer bevorzugten Ausführungsform handelt es sich bei den Resten $R^1$ und $R^2$ um H. In einer weiteren bevorzugten Ausführungsform handelt es sich bei allen Resten $R^1$, $R^2$, $R^3$ und $R^4$ um H. In einer weiteren bevorzugten Ausführungsform handelt es sich mindestens zwei der Reste $R^1$, $R^2$, $R^3$ und $R^4$ um H.

In einer weiteren bevorzugten Ausführungsform sind die Reste $R^1$, $R^2$, $R^3$ und $R^4$ unabhängig voneinander ausgewählt aus H, Methyl und Ethyl und es handelt sich bei mindestens zwei der Reste $R^1$, $R^2$, $R^3$ und $R^4$ um H, wobei es sich bevorzugt bei den Resten $R^1$ und $R^2$ um H handelt.

Insbesondere bevorzugt werden jedoch als Monomeren B1 2-Vinyl-2-oxazolin, 2-Vinyl-4-methyl-2-oxa-zolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-tetramethyl-2-oxazolin, 2-Isopropenyl-2-oxa-zolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2-Isopropenyl-5,5-dimethyl-2-oxazolin und/oder 2- Isopropenyl-4,4,5,5-tetramethyl-2-oxazolin eingesetzt. Besonders bevorzugt ist die Verwendung von 2-Vinyl-2-oxazolin und/oder 2-Isopropenyl-2-oxazolin, wobei 2-Isopropenyl-2-oxazolin insbesondere bevorzugt ist.

Als Monomere A3 können alle ethylenisch ungesättigten Verbindungen eingesetzt werden, welche sich von den Monomeren A1, A2 und B1 unterscheiden und als Monomeren B3 können alle ethylenisch ungesättigten Verbindungen eingesetzt werden, welche sich von den Monomeren A1, B1 und B2 unterscheiden, wie beispielsweise (Meth)acrylsäurealkylester, wobei bevorzugt solche (Meth)acrylsäurealkylester umfasst sein sollen, deren linearer oder verzweigter Alkylrest 1 bis 20 Kohlenstoffatome aufweist, besonders bevorzugt 1 bis 10, ganz besonders bevorzugt 1 bis 8 und insbesondere 1 bis 4 Kohlenstoffatome. Von Bedeutung in diesem Zusammenhang ist, dass die Schreibweise ("Meth)acrylsäure"verbindungen bzw. "(Meth)acrylat"verbindungen generell sowohl die entsprechenden Acrylsäureverbindungen wie auch die entsprechenden Methacrylsäureverbindungen umfassen soll.

Zu nennen als Beispiele für (Meth)acrylsäurealkylester sind (Meth)acrylsäuremethylester, (Meth)acrylsäureethylester, (Meth)acrylsäure-n-propylester, (Meth)acrylsäure-n-butylester, (Meth)acrylsäure-iso-butylester, (Meth)acrylsäure-sek-butylester, (Meth)acrylsäure-n-pentylester, (Meth)acrylsäure-iso-pentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und/oder (Meth)acrylsäure-n-dodecylester. Als (Meth)acrylsäurealkylester bevorzugt sind Methylmethacrylat, Methylacrylat, Ethylacrylat, n-Butylacrylat, n-Hexylacrylat, n-Octylacrylat, 2-Ethylhexylacrylat und/oder 3-Propylheptylacrylat. Als Monomere A3 und B3 kommen vorteilhaft auch Vinylaromaten mit bis zu 20 C-Atomen in Betracht.

Bei den Vinylaromaten mit bis zu 20 C-Atomen handelt es sich um optional substituierte aromatische Systeme mit einer Vinylgruppe, die sich in Konjugation zum aromatischen Ringsystem befindet.

Solche substituierten Vinylaromaten weisen häufig eine oder mehrere, bevorzugt eine 1 bis 10 Kohlenstoffatome, oft 1 bis 6 und bevorzugt 1 bis 4 Kohlenstoffatome aufweisende lineare oder verzweigte Alkylgruppen auf, die sich am Aromaten oder an der Vinylgruppe befinden kann. Befindet sich der Substituent am Aromaten, so kann sich der Substituent bevorzugt in orthooder para-Position, besonders bevorzugt in para-Position zur Vinylgruppe befinden.

Als vinylaromatische Verbindungen kommen insbesondere Vinyltoluol, Vinylnaphthalin, $\alpha$- und p-Methylstyrol, $\alpha$-Butylstyrol, 4-n-Butylstyrol, 4-n-Decylstyrol und/oder Styrol in Betracht, wobei jedoch Styrol und/oder $\alpha$-Methylstyrol besonders bevorzugt sind.

Die Monomeren A3 und B3 umfassen aber auch ethylenisch ungesättigte Nitrile mit bis zu 20 C-Atomen, wie insbesondere Fumarsäuredinitril, Acrylnitril und Methacrylnitril, bevorzugt Acrylnitril und Methacrylnitril und besonders bevorzugt Acrylnitril, Vinylester von bis zu 20 C-Atome enthaltenden Carbonsäuren, wie insbesondere Vinyllaurat, Vinylstearat, Vinylpropionat, Versaticsäurevinylester, Vinylbutyrat und Vinylacetat, bevorzugt jedoch Vinylacetat, Vinyl- und Vinylidenhalogenide mit bis zu 10 C-Atomen, wie insbesondere mit Chlor, Fluor oder Brom substituierte ethylenisch ungesättigte Verbindungen, bevorzugt Vinylchlorid und Vinylidenchlorid und Vinylether von 1 bis 10 C-Atome enthaltenden Alkoholen, wie vorteilhaft Methylvinylether, Ethylvinylether, n-Propylvinylether, iso-Propylvinylether, n-Butylvinylether, sek-Butylvinylether, iso-Butylvinylether, tert-Butylvinylether und n-Octylvinylether, wobei Vinylether von 1 bis 4 C-Atome enthaltenden Alkoholen bevorzugt sind.

In untergeordnetem Maße, d.h. $\leq$ 20 Gew.-%, vorteilhaft $\leq$ 10 Gew.-% und insbesondere vorteilhaft $\leq$ 5 Gew.-%, jeweils bezogen auf die Gesamtmenge der Monomeren A3 bzw. B3, können die Monomeren A3 und B3 auch die nachfolgenden, funktionalisierten ethylenisch ungesättigten Monomere umfassen:
Als funktionalisierte ethylenisch ungesättigte Monomere kommen alle monoethylenisch ungesättigten Verbindungen mit wenigstens einer Hydroxygruppe, wie insbesondere alle Hydroxyalkyl-, vorteilhaft Hydroxy-$C_2$-$C_{10}$-alkyl-, bevorzugt Hydroxy-$C_2$-$C_4$-alkyl- und besonders vorteilhaft Hydroxy-$C_2$-$C_3$-alkylacrylate und/oder -methacrylate in Betracht, wobei im Rahmen dieser Schrift auch die alkoxylierten, d.h. die mit Alkylenoxiden (im wesentlichen Ethylenoxid und Propylenoxid) umgesetzten Hydroxyalkylacrylate und/oder -methacrylate als Monomere B1 und B2 angesehen werden sollen.
Mit Vorteil ist das hydroxyalkylgruppenhaltige Monomere B1 und B2 ausgewählt aus der Gruppe umfassend Diethylenglykolmonoacrylat, 4-Hydroxybutylacrylat, 3-Hydroxypropylacrylat, 2-Hydroxypropylacrylat, 2-Hydroxyethylacrylat, Diethylenglykolmonomethacrylat, 4-Hydroxybutylmethacrylat, 3-Hydroxypropylmethacrylat, 2-Hydroxypropylmethacrylat und 2-Hydroxyethylmethacrylat. Insbesondere vorteilhaft wird 2-Hydroxyethylacrylat und/oder 2-Hydroxyethylmethacrylat eingesetzt, wobei 2-Hydroxyethylmethacrylat besonders bevorzugt ist.

Dabei sollen die funktionalisierten ethylenisch ungesättigten Monomere auch solche Hydroxyalkylacrylate und -methacrylate umfassen, die mehr als eine Hydroxygruppe aufweisen, beispielsweise zwei bis fünf, bevorzugt zwei bis vier, besonders bevorzugt zwei bis drei Hydroxygruppen. Beispiele dafür sind Glycerinmonoacrylat und -methacrylat, Trimethylolpropanmonoacrylat und -methacrylat, Pentaerythritmonoacrylat und -methacrylat sowie Monoacrylate und -methacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit und Isomalt.

Zu den erfindungsgemäß einsetzbaren funtkionalisierten ethylenisch ungesättigten Verbindungen zählen auch organische Verbindungen, welche wenigstens zwei nicht konjugierte ethylenisch ungesättigte Gruppen aufweisen, wie beispielsweise, 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythritoltri- und -tetra(meth)acrylat, Allylmethacrylat, 1,2-, 1,3- und 1,4-Divinylbenzol sowie Mischungen davon. Besonders bevorzugt sind diese Verbindungen ausgewählt aus der Gruppe bestehend aus Divinylbenzol, 1,4-Butandioldiacrylat und Allylmethacrylat.

Weitere erfindungsgemäß einsetzbare funtkionalisierte ethylenisch ungesättigte Verbindungen sind ausgewählt aus der Gruppe bestehend aus (Meth)acrylsäure-2-(2-oxo-imidazolidin-1-yl)-ethylester (Ureidoethyl(meth)acrylat), N-[2-(2-oxo-oxazolidin-3-yl)-ethyl]-methacrylat, Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid. Bevorzugt in dieser Gruppe sind (Meth)acrylsäure-2-(2-oxo-imidazolidin-1-yl)-ethylester, (Acetoacetoxy)ethylmethacrylat, Diacetonacrylamid und/oder Diacetonmethacrylamid, besonders bevorzugt sind (Meth)acrylsäure-2-(2-oxo-imidazolidin-1-yl)-ethylester und (Acetoacetoxy)ethylmethacrylat.

Zu den erfindungsgemäß einsetzbaren funtkionalisierten ethylenisch ungesättigten Verbindungen zählen aber auch Verbindungen mit einer (Meth)acrylat- und einer Epoxygruppe. Insbesondere zu erwähnen sind Glycidylacrylat und Glycidylmethacrylat, bevorzugt Glycidylmethacrylat.

Erfindungsgemäß von Bedeutung ist es, dass die vorgenannten Monomeren A1 bis A3 sowie, B1 bis B3 einzeln oder auch als Gemische eingesetzt werden. Von den Monomeren A1 bis A3 können jeweils die Gesamt- bzw. Teilmengen im wässrigen Polymerisationsmedium vor Initiierung der Polymerisationsreaktion vorgelegt und die gegebenenfalls verbliebenen Teilmengen unter Polymerisationsbedingungen zudosiert werden. Es ist jedoch auch möglich, die Gesamtmengen der Monomeren A1 bis A3 (Gesamtmonomerenmenge A) dem wässrigen Polymerisationsmedium unter Polymerisationsbedingungen zuzudosieren. In einer Ausführungsform wird in der ersten Polymerisationsstufe wenigstens eine Teilmenge ≤ 10 Gew.-% der Gesamtmonomerenmenge A im wässrigen Polymerisationsmedium vor Initiierung der Polymerisationsreaktion vorgelegt und die verbliebene Restmenge dem wässrigen Polymerisationsmedium unter Polymerisationsbedingungen zudosiert, während in der zweiten Polymerisationsstufe die Gesamtmenge der Monomeren B1 bis B3 (Gesamtmonomerenmenge B) dem wässrigen Polymerisationsmedium unter Polymerisationsbedingungen zudosiert werden. Dabei können die Monomeren A1 bis A3 sowie B1 bis B3 dem wässrigen Polymerisationsmedium jeweils in Einzelströmen, als Monomerengemisch oder in Form einer wässrigen Monomerenemulsion diskontinuierlich, sowie kontinuierlich mit gleichbleibenden oder sich ändernden Mengenströmen zudosiert werden.

Mit besonderem Vorteil werden die Monomeren der ersten und der zweiten Polymerisationsstufe jedoch jeweils als Monomerengemische, insbesondere vorteilhaft als wässrige Monomerenemulsionen eingesetzt. Vorteilhaft werden wenigstens ≥ 90 Gew.-% und insbesondere vorteilhaft die Gesamtmengen der Monomerengemische der ersten und der zweiten Polymerisationsstufe dem wässrigen Polymeriationsmedium als wässrige Monomerenemulsionen unter Polymerisationsbedingungen zudosiert.

Erfindungsgemäß vorteilhaft beträgt die Gesamtmenge der Monomeren A1 ≥ 4,0 und ≤ 12 Gew.-% und bevorzugt ≥ 5,0 und ≤ 10 Gew.-%, jeweils bezogen auf die Gesamtmonomerenmenge A.

Erfindungsgemäß vorteilhaft beträgt die Gesamtmenge der Monomeren B1 ≥ 0,5 und ≤ 5,0 Gew.-% und bevorzugt ≥ 1,0 und ≤ 3,0 Gew.-%, jeweils bezogen auf die Gesamtmonomerenmenge B.

Im erfindungsgemäßen Verfahren werden die Gesamtmenge der Monomeren A1 in der ersten Polymerisationsstufe und die Gesamtmenge der Monomeren B1 in der zweiten Polymerisationsstufe jedoch vorteilhaft so gewählt, dass das molare Verhältnis von Säuregruppen zu Oxazolingruppen ≥ 1,5, bevorzugt ≥ 3 und insbesondere bevorzugt ≥ 5 beträgt.

Die carbonsäureamidgruppenhaltigen Monomere werden erfindungsgemäß sowohl in der ersten Polymerisationsstufe (Monomere A2) und in der zweiten Polymerisationsstufe (Monomere B2) eingesetzt. Dabei liegen die Mengenverhältnisse von Monomeren A2 zu Monomeren B2 vorteilhaft im Bereich 30:70 bis 70:30 und insbesondere vorteilhaft im Bereich 40:60 bis 60:40. Dabei beträgt die Gesamtmenge an Monomeren A2 und Monomeren B2 bevorzugt ≥ 1,0 und ≤ 3,0 Gew.-% und besonders bevorzugt ≥ 1,5 und ≤ 2,5 Gew.-%, jeweils bezogen auf die Gesamtmonomerenmenge.

Erfindungsgemäß liegt das Gewichtsverhältnis von Gesamtmonomerenmenge A zur Gesamtmonomerenmenge B im Bereich von 1:9 bis 9:1, vorteilhaft im Bereich von 1:2 bis 2:1 und insbesondere vorteilhaft im Bereich von 1:1,5 bis 1,5:1 und bevorzugt im Bereich 1:1,2 bis 1,2:1.

In einer bevorzugten Ausführungsform werden im erfindungsgemäßen Verfahren in der ersten Polymerisationsstufe

| | |
|---|---|
| ≥ 4,0 und ≤ 12 Gew.-% | Monomere A1, |
| ≥ 1,0 und ≤ 3,0 Gew.-% | Monomere A2, |
| ≥ 85 und ≤ 95 Gew.-% | Monomere A3, |

und besonders vorteilhaft

| | |
|---|---|
| ≥ 5,0 und ≤ 10 Gew.-% | Monomere A1, |
| ≥ 1,5 und ≤ 2,5 Gew.-% | Monomere A2, |
| ≥ 88 und ≤ 93,5 Gew.-% | Monomere A3, |

eingesetzt.

In der zweiten Polymerisationsstufe des erfindungsgemäßen Verfahrens werden in der bevorzugten Ausführungsform

| | |
|---|---|
| $\geq$ 0,5 und $\leq$ 5,0 Gew.-% | Monomere B1, |
| $\geq$ 1,0 und $\leq$ 3,0 Gew.-% | Monomere B2, |
| $\geq$ 92 und $\leq$ 99 Gew.-% | Monomere B3, |

und besonders vorteilhaft

| | |
|---|---|
| $\geq$ 1,0 und $\leq$ 3,0 Gew.-% | Monomere B1, |
| $\geq$ 1,5 und $\leq$ 2,5 Gew.-% | Monomere B2, |
| $\geq$ 94,5 und $\leq$ 97,5 Gew.-% | Monomere B3, |

eingesetzt.

In einer besonders bevorzugten Ausführungsform werden in den vorgenannten Ausführungsformen als Monomeren A1 Acrylsäure und/oder Methacrylsäure, als Monomeren A2 und B2 Acrylamid und/oder Methacrylamid, als Monomere A3 und B3 Styrol und n-Butylacrylat und als Monomer B1 Isopropenyl-2-oxazolin eingesetzt.

Die radikalisch initiierte wässrige Emulsionspolymerisation zur Herstellung der Dispersionspolymerisate wird in der Regel in Gegenwart eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation zu initiieren. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und DiNatrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kaliumund/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden und insbesondere vorteilhaft < 1 Stunde aufweist und dabei immer genügend Startradikale zur Verfügung stehen, um die Polymerisationsreaktion zu initiieren und aufrechtzuerhalten.

Als Reaktionstemperatur für die radikalisch initiierte wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 60 bis 100 °C angewendet. Die radikalisch initiierte wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A1 bis B3 mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und

oft 850 mbar (absolut) eingestellt. Vorteilhaft wird die radikalische wässrige Emulsionspolymerisation bei 1 atm unter Sauerstoffausschluss, insbesondere unter Inertgasatmosphäre, wie beispielsweise unter Stickstoff oder Argon durchgeführt.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Maßgabe des Verbrauchs kontinuierlich oder diskontinuierlich zuzugeben. Selbstverständlich können in der ersten und in der zweiten Polymerisationsstufe unterschiedliche Radikalinitiatoren in unterschiedlichen Mengen eingesetzt werden. In einer bevorzugten Ausführungsform wird die Gesamtmenge des Radikalinitiators im wässrigen Reaktionsmedium vor Initiierung der Polymerisationsreaktion vorgelegt.

In der Regel beträgt die Gesamtmenge an Radikalinitiatoren $\geq$ 0,05 und $\leq$ 5 Gew.-%, bevorzugt $\geq$ 0,1 und $\leq$ 3 Gew.-% und besonders bevorzugt $\geq$ 0,1 und $\leq$ 1,5 Gew.-%, jeweils bezogen auf die Gesamtmonomerenmenge.

Zur Einstellung der gewichtsmittleren Molekulargewichte der in der ersten und in der zweiten Polymerisationsstufe gebildeten Polymeren können radikalkettenübertragende Verbindungen (Radikalkettenregler) eingesetzt werden. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkansäuren und deren Derivate, wie 3-Mercaptopropionsäure-6-methylheptylester oder 2-Mercaptoethansäure-2-ethylhexylester sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter Radikalkettenregler einzusetzen. Erfindungsgemäß kann die Gesamtmenge des Radikalkettenreglers im wässrigen Reaktionsmedium vor Initiierung der Polymerisationsreaktion vorgelegt werden. Es ist aber auch möglich, gegebenenfalls lediglich eine Teilmenge des Radikalkettenreglers im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Bedarf kontinuierlich oder diskontinuierlich zuzugeben. Selbstverständlich können in der ersten und in der zweiten Polymerisationsstufe unterschiedliche Radikalkettenregler in unterschiedlichen Mengen eingesetzt werden.

In der Regel beträgt die Gesamtmenge an Radikalkettenregler $\geq$ 0 und $\leq$ 5 Gew.-%, bevorzugt $\geq$ 0 und $\leq$ 2 Gew.-% und besonders bevorzugt $\geq$ 0 und $\leq$ 1 Gew.-%, jeweils bezogen auf die Gesamtmonomerenmenge.

Vorteilhaft wird erfindungsgemäße Verfahren in Anwesenheit von Dispergierhilfsmitteln durchgeführt, welche sowohl die Monomerentröpfchen als auch Polymerisatteilchen in der wässrigen Phase dispers verteilt halten und so die Stabilität der erzeugten wässrigen Dispersionen der Dispersionspolymerisate gewährleisten. Als solche kommen sowohl die zur Durchführung von radikalischen wässrigen Emulsionspolymerisationen üblicherweise eingesetzten Schutzkolloide wie auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C4 bis C12), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxilierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel III

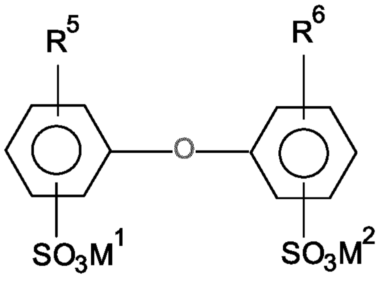

Formel (III)

worin $R^5$ und $R^6$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel III bedeuten $R^5$ und $R^6$ bevorzugt lineare oder verzweigte Alkylreste mit 6 bis 18 C-Atomen, insbesondere mit 6, 12 und 16 C-Atomen oder Wasserstoff, wobei $R^5$ und $R^6$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen der allgemeinen Formel III, in denen $M^1$ und $M^2$ Natrium, $R^5$ ein verzweigter Alkylrest mit 12 C-Atomen und $R^6$ ein H-Atom oder $R^5$ sind. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen der allgemeinen Formel III sind allgemein bekannt, z.B. aus US-A 4269749, und im Handel erhältlich.

Werden erfindungsgemäß Dispergierhilfsmittel eingesetzt, so finden vorteilhaft anionische und/oder nichtionische und insbesondere vorteilhaft anionische Tenside Verwendung.

In einer spezifischen Ausführungsform der vorliegenden Erfindung können als Emulgatoren solche eingesetzt werden, die bei der radikalischen Emulsionspolymerisation in das Polymer eingebaut werden. Dabei handelt es sich in der Regel um Verbindungen, die mindestens eine radikalisch polymerisierbare Gruppe tragen, bevorzugt ausgewählt aus der Gruppe bestehend aus Allyl, Acrylat, Methacrlyat und Vinylether, und mindestens einer emulgierend wirkenden Gruppe, bevorzugt ausgewählt aus der oben angegebenen Gruppe.

Dies sind beispielsweise einbaubare Emulgatoren der Marken Bisomer® MPEG 350 MA der Firma Laporte, Hitenol® BC-20 (APEO), Hitenol® BC-2020, Hitenol® KH-10 oder Noigen® RN-50 (APEO) der Firma Dai-Ichi Kogyo Seiyaku Co., Ltd., Maxemul® 6106, Maxemul® 6112, Maxemul® 5010, Maxemul® 5011 der Firma Croda, Sipomer® PAM 100, Sipomer® PAM 200, Sipomer® PAM 300, Sipomer® PAM 4000, Sipomer® PAM 5000 der Firma Rhodia, Adeka® Reasoap® PP-70, Adeka® Reasoap® NE-10, Adeka® Reasoap® NE-20, Adeka® Reasoap® NE-30, Adeka® Reasoap® NE-40, Adeka® Reasoap® SE-10N, Adeka® Reasoap® SE-1025A, Adeka® Reasoap® SR-10, Adeka® Reasoap® SR-1025, Adeka® Reasoap® SR-20, Adeka® Reasoap® ER-10, Adeka® Reasoap® ER-20, Adeka® Reasoap® ER-30, Adeka® Reasoap® ER-40 der Firma Adeka, Pluriol® A 010 R, Pluriol® A 12 R, Pluriol® A 23 R, Pluriol® A 46 R, Pluriol® A 750 R, Pluriol® A 950 R, Pluriol® A 590 I, Pluriol® A 1190 I, Pluriol® A 590 V, Pluriol® A 1190 V, Pluriol® A 5890 V, Pluriol® A 308 R und DAA ES 8761 der Firma BASF SE, Latemul® S 180 A und Latemul® S 180 der Firma Kao, Eleminol® JS-2 der Firma Sanyou Kasei, Aquaron® HS-1025 der Firma Daiichi Kogyou Seiyaku sowie C12-AMPS der Firma Lubrizol.

In der Regel beträgt die Gesamtmenge an Dispergierhilfsmitteln ≥ 0,05 und ≤ 3 Gew.-%, bevorzugt ≥ 0,1 und ≤ 2 Gew.-% und besonders bevorzugt ≥ 0,5 und ≤ 1,5 Gew.-%, jeweils bezogen auf die Gesamtmonomerenmenge.

Erfindungsgemäß kann die Gesamtmenge des eingesetzten Dispergierhilfsmittels im wässrigen Reaktionsmedium vor Initiierung der Polymerisationsreaktion vorgelegt werden. Es ist aber auch möglich, gegebenenfalls lediglich eine Teilmenge des Dispergierhilfsmittels im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Bedarf kontinuierlich oder diskontinuierlich zuzugeben. Selbstverständlich können in der ersten und in der zweiten Polymerisationsstufe unterschiedliche Dispergierhilfsmittel in unterschiedlichen Mengen eingesetzt werden. Mit Vorteil wird eine Teilmenge (≤ 50 Gew.-%) der Dispergierhilfsmittel im Reaktionsgefäß vorgelegt und die verbleibenden Restmengen (≥ 50 Gew.-%) in der ersten und in der zweiten Polymerisationsstufe kontinuierlich zudosiert.

Von Bedeutung ist ferner, dass im erfindungsgemäßen Verfahren in einer bevorzugten Ausführungsform Art und Menge der Monomeren A1 bis A3 und/oder der Monomeren B1 bis B3 so gewählt werden, dass ein allein aus diesen Monomeren aufgebautes Polymerisat eine Glasübergangstemperatur gemessen nach DIN EN ISO 11357-2 (2013-09) [Differentialthermoanalyse, midpoint temperature, Aufheizrate 20 K/min] im Bereich ≥ -15 und ≤ 100 °C und insbesondere bevorzugt ≥ 0 und ≤ 50 °C aufweist.

Dabei ist dem Fachmann geläufig, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten unter Verwendung folgender Formel

$$1/Tg = x_1/Tg^1 + x_2/Tg^2 + .... x_n/Tg^n,$$

in guter Annäherung abgeschätzt werden kann, wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

Wesentlich ist ferner, dass die radikalisch initiierte wässrige Emulsionspolymerisation in der ersten Polymerisationsstufe vorteilhaft auch in Anwesenheit einer Polymersaat, beispielsweise in Anwesenheit von 0,01 bis 10 Gew.-%, häufig von 0,05 bis 7,0 Gew.-% und oft von 0,1 bis 4,0 Gew.-% einer Polymersaat, jeweils bezogen auf die Gesamtmonomerenmenge A, durchgeführt werden kann.

Eine Polymersaat wird erfindungsgemäß insbesondere dann eingesetzt, wenn die Teilchengröße der mittels einer radikalisch initiierten wässrigen Emulsionspolymerisation herzustellenden Polymerpartikel gezielt eingestellt werden soll (siehe hierzu beispielsweise US-A 2520959 und US-A 3397165).

Insbesondere wird im erfindungsgemäßen Verfahren eine Polymersaat eingesetzt, deren Polymersaatpartikel einen gewichtsmittleren Durchmesser Dw ≤ 100 nm, häufig ≥ 5 nm bis ≤ 50 nm und oft ≥ 15 nm bis ≤ 35 nm aufweisen.

Üblicherweise wird die Polymersaat in Form einer wässrigen Polymerisatdispersion eingesetzt.

Wird eine Polymersaat verwendet, so wird vorteilhaft eine Fremdpolymersaat eingesetzt. Im Unterschied zu einer sogenannten in situ-Polymersaat, welche vor Beginn der eigentlichen Emulsionspolymerisation im Reaktionsgefäß hergestellt wird und welche in der Regel die gleiche monomere Zusammensetzung aufweist wie das durch die nachfolgende radikalisch initiierte wässrige Emulsionspolymerisation hergestellte Polymer A, wird unter einer Fremdpolymersaat eine Polymersaat verstanden, die in einem separaten Reaktionsschritt hergestellt wurde und deren monomere Zusammensetzung von dem durch die radikalisch initiierte wässrige Emulsionspolymerisation hergestellten Polymer A verschieden ist, was jedoch nichts anderes bedeutet, als dass zur Herstellung der Fremdpolymersaat und zur Herstellung der wässrigen Polymerisatdispersion unterschiedliche Monomere bzw. Monomerenmischungen mit unterschiedlicher Zusammensetzung eingesetzt werden. Die Herstellung einer Fremdpolymersaat ist dem Fachmann geläufig und erfolgt üblicherweise dergestalt, dass eine relativ kleine Menge an Monomeren sowie eine relativ große Menge an Emulgatoren in einem Reaktionsgefäß vorgelegt werden und bei Reaktionstemperatur eine ausreichende Menge an Polymerisationsinitiator zugegeben wird.

Erfindungsgemäß bevorzugt wird eine Polymerfremdsaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylatpolymersaat.

Die Gesamtmenge an Fremdpolymersaat kann im Polymerisationsgefäß vorgelegt werden. Es ist aber auch möglich, lediglich eine Teilmenge der Fremdpolymersaat im Polymerisationsgefäß vorzulegen und die verbleibende Restmenge während der Polymerisation gemeinsam mit den Monomeren A1 bis A3 zuzugeben. Falls erforderlich, kann aber auch die Gesamtpolymersaatmenge im Verlauf der Polymerisation zuzugeben werden. Vorzugsweise wird die Gesamtmenge an Fremdpolymersaat vor Initiierung der Polymerisationsreaktion im Polymerisationsgefäß vorgelegt.

Verfahrenswesentlich ist, dass der pH-Wert des wässrigen Polymerisationsgemisches während der ersten Polymerisationsstufe < 5, bevorzugt< 4,5 und insbesondere bevorzugt ≤ 4 beträgt. Nach Beendigung der ersten Polymerisationsstufe, d.h. nachdem die Gesamtmonomerenmenge A zu ≥ 95 Gew.-%, vorteilhaft zu ≥ 98 Gew.-% und insbesondere vorteilhaft zu ≥ 99 Gew.-% umgesetzt wurde und vor Beginn der zweiten Polymerisationsstufe, d.h. bevor die Monomeren B1 bis B3 zudosiert werden, wird der pH-Wert des wässrigen Polymerisationsgemisches durch Zugabe einer Base auf einen Wert > 6, vorteilhaft ≥ 7 und insbesondere ≥ 8 erhöht. Erfindungsgemäß vorteilhaft erfolgt die pH-Messung bzw. pH-Kontrolle direkt in dem wässrigen Polymerisationsmedium bei Polymerisationstemperatur mittels einer geeichten Hochtemperatur-pH-Elektrode, wie insbesondere einer InPro® 325X der Firma Mettler Toledo.

Erfindungsgemäß können alle üblichen Basen eingesetzt werden, wie Alkali-, Erdalkali- oder Ammoniumhydroxide bzw. -carbonate oder -hydrogencarbonate, wie beispielsweise NaOH, KOH, $NH_4OH$, $Ca(OH)_2$, $Na_2CO_3$, $K_2CO_3$, $(NH_4)_2CO_3$, $NaHCO_3$, $KHCO_3$ oder $NH_4HCO_3$. Als Basen ebenfalls geeignet sind Ammoniak sowie primäre, sekundäre oder tertiäre organische Amine, wie beispielsweise Methylamin, Ethylamin, Propylamin-1, Propylamin-2, n-Butylamin-1, n-Butylamin-2, 2-Methylpropylamin-1, 2-Methylpropylamin-2 etc., Dimethylamin, Diethylamin, Din-propylamin, Di-isopropylamin, Di-n-butylamin, Di-2-methylpropylamin etc., Trimethylamin, Triethylamin, Tri-n-propylamin, Tri-iso-propylamin, Tri-n-butylamin, Tri-2-methylpropylamin etc., aber auch gemischte Amine, wie N-Methyl-N-ethylamin, N,N-Dimethyl-N-ethylamin etc. Mit Vorteil werden jedoch zur pH-Werterhöhung vor der zweiten Polymerisationsstufe solche Basen eingesetzt, welche einen Siedepunkt von $\leq$ 20 °C, vorteilhaft $\leq$ 10 °C und insbesondere vorteilhaft $\leq$ 0 °C bei einem Druck von 1,013 bar (absolut) aufweisen, wie insbesondere Ammoniak, insbesondere in Form seiner wässrigen Lösung oder seiner basischen Salze $(NH_4)_2CO_3$, $NH_4HCO_3$, wobei jedoch Ammoniak, insbesondere in Form seiner wässrigen Lösung besonders bevorzugt ist.

Die nach der zweiten Polymerisationsstufe erhaltene wässrige Polymerdispersion enthält Polymerisatteilchen, deren gewichtsmittlerer Teilchendurchmesser im Bereich $\geq$ 50 und $\leq$ 500 nm, vorteilhaft im Bereich $\geq$ 60 und $\leq$ 200 nm und insbesondere im Bereich $\geq$ 80 und $\leq$ 200 nm, liegen. Die Bestimmung der gewichtsmittleren Teilchendurchmesser erfolgt erfindungsgemäß nach ISO 13321 mit einem High Performance Particle Sizer der Fa. Malvern bei 22 °C und einer Wellenlänge von 633 nm.

Selbstverständlich sind in einer bevorzugten Ausführungsform auch die nach dem erfindungsgemäßen Verfahren zugänglichen wässrigen Polymerdispersionen umfasst.

Von Bedeutung ist ferner, dass sich die nach dem erfindungsgemäßen Verfahren zugänglichen wässrigen Polymerdispersionen vorteilhaft als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen verwenden lassen.

Insbesondere vorteilhaft lassen sich die nach dem erfindungsgemäßen Verfahren zugänglichen wässrigen Polymerdispersionen zur Verbesserung der Reißfestigkeit sowie zur Erhöhung des Berstdruckes bei Filterpapieren unter nassen Bedingungen verwenden. Von Bedeutung ist ferner, dass sich die erfindungsgemäßen wässrigen Polymerdispersionen durch eine gute Elektrolytstabilität auszeichnen.

Die Erfindung soll anhand der nachfolgenden nicht einschränkenden Beispiele erläutert werden.

Beispiele

Polymerdispersion 1 (PD1)

In einen 2 L-Reaktor mit Ankerrührer wurden unter Stickstoffatmosphäre 10,3 g einer 33 gew.-%igen wässrigen Polystyrolsaat (gewichtsmittlerer Teilchendurchmesser 30 nm) und 327,4 g entionisiertes Wasser gefüllt und aufgeheizt. Nach Erreichen einer Innentemperatur von 75 °C wurden 13 g einer 7 gew.-%igen wässrigen Natriumperoxodisulfatlösung innerhalb von 2 Minuten zugegeben und für 5 Minuten bei ansteigender Temperatur gerührt. Anschließend wurden nach Erreichen der Reaktionstemperatur von 85 °C der pH-Wert zu 3,8 bestimmt und dann 30,3 g einer 7 gew.-% igen wässrigen Natriumperoxodisulfatlösung über 180 Minuten mit konstant gleich bleibendem Mengenstrom zudosiert. Zeitgleich beginnend wurde während 90 Minuten eine Monomeremulsion bestehend aus

| | |
|---|---|
| 55,0 g | entionisiertem Wasser |
| 18,3 g | einer 3 gew.-%igen wässrigen Natriumpyrophosphatlösung |
| 1,2 g | einer 45 gew.-%igen wässrigen Dodecyldiphenyletherdisulfonsäurenatriumsalz-Lösung (Dowfax® 2A1 von Dow Chemical) |
| 9,8 g | einer 28 gew.-%igen wässrigen Natriumlaurylpolyethoxysulfat-Lösung (Disponil® FES 27 von BASF SE) |
| 34,3 g | einer 15 gew.-%igen wässrigen Methacrylamid-Lösung |
| 22,0 g | Acrylsäure |
| 147,5 g | Styrol und |
| 111,4 g | n-Butylacrylat |

mit konstant gleichbleibendem Mengenstrom zudosiert. Nach Ende des Zulaufes wurde die Zulaufleitung mit 33,0 g entionisiertem Wasser gespült anschließend innerhalb von 15 Minuten 27,5 g einer 25 gew.-%igen wässrigen Ammoniaklösung zudosiert wobei sich im wässrigen Polymerisationsgemisch ein pH-Wert von 8,7 einstellte. Anschließend wurde über 70 Minuten eine Monomeremulsion bestehend aus

| | |
|---|---|
| 55,0 g | entionisiertem Wasser |
| 18,3 g | einer 3 gew.-%igen wässrigen Natriumpyrophosphatlösung |
| 1,2 g | einer 45 gew.-%igen wässrigen Dodecyldiphenyletherdisulfonsäurenatriumsalz-Lösung |
| 9,8 g | einer 28 gew.-%igen wässrigen Natriumlaurylpolyethoxysulfat-Lösung |
| 34,3 g | einer 15 gew.-%igen wässrigen Methacrylamid-Lösung |
| 5,2 g | Isopropenyl-2-oxazolin |
| 142,3 g | Styrol und |
| 111,4 g | n-Butylacrylat |

mit konstant gleichbleibendem Mengenstrom zudosiert. Nach Ende des Zulaufes wurde das Polymerisationsgemisch noch für 15 Minuten bei Reaktionstemperatur nachpolymerisiert und die Temperatur anschließend auf 80 °C gesenkt. Nach Erreichen der 80 °C wurden innerhalb von 60 Minuten zeitgleich beginnend 5,5 g einer 10 gew.-%igen wässrigen tert.-Butylhydroperoxid-Lösung und 3,7 g einer 13 gew.-%igen wässrigen Acetonbisulfit-Lösung (1:1-Additionsprodukt aus Aceton und Natriumhydrogensulfit) über separate Zuläufe mit konstant gleichbleibenden Mengenströmen zudosiert. Nach Abkühlen auf Raumtemperatur (20 bis 25 °C) und der Zugabe von 33,0 g entionisiertem Wasser erhielt man eine wässrige Polymerdispersion mit einem Feststoffgehalt von 42 Gew.-%, einem pH-Wert von 9,2. Die Glasübergangstemperatur der Dispersion wurde zu 34,4 °C bestimmt.

Die pH-Wertbestimmung vor, während und nach der Polymerisationsreaktion erfolgte generell mittels einer geeichten pH Elektrode InPro® 325X der Firma Mettler-Toledo GmbH.

Die Glasübergangstemperaturen wurden generell gemäß DIN EN ISO 11357-2 (2013-09) über Differential Scanning Calorimetry (DSC) mit einer Aufheizrate von 20 K/min mittels eines DSC Q2000 der Firma TA Instruments ermittelt. Dabei wurden die Mittelpunkttemperaturen zur Bestimmung herangezogen.

Die Feststoffgehalte wurden generell bestimmt, indem eine definierte Menge der wässrigen Polymerdispersion (ca. 0,8 g) mit Hilfe des Feuchtebestimmers HR73 der Firma Mettler Toledo bei einer Temperatur von 130 °C bis zur Gewichtskonstanz getrocknet wurde. Es werden jeweils zwei Messungen durchgeführt und der Mittelwert dieser beiden Messungen angegeben. Polymerdispersion 2 (PD2)

In einen 2 L-Reaktor mit Ankerrührer wurden unter Stickstoffatmosphäre 9,0 g einer 33 gew.-%igen wässrigen Polystyrolsaat (gewichtsmittlerer Teilchendurchmesser 30 nm) und 361,4 g entionisiertes Wasser gefüllt und aufgeheizt. Nach Erreichen einer Innentemperatur von 75 °C wurden 11,3 g einer 7 gew.-%igen wässrigen Natriumperoxodisulfatlösung zugegeben und für 5 Minuten bei ansteigender Temperatur gerührt. Anschließend wurden nach Erreichen der Reaktionstemperatur von 95 °C der pH-Wert zu 3,9 bestimmt und dann 26,4 g der 7 gew.-% igen wässrigen Natriumperoxodisulfatlösung über 145 Minuten mit konstant gleich bleibendem Mengenstrom zudosiert. Zeitgleich beginnend wurde während 70 Minuten eine Monomeremulsion bestehend aus

| | |
|---|---|
| 55,0 g | entionisiertem Wasser |
| 18,3 g | einer 3 gew.-%igen wässrigen Natriumpyrophosphatlösung |
| 1,2 g | einer 45 gew.-%igen wässrigen Dodecyldiphenyletherdisulfonsäurenatriumsalz-Lösung |
| 8,6 g | einer 28 gew.-%igen wässrigen Natriumlaurylpolyethoxysulfat-Lösung |
| 29,9 g | einer 15 gew.-%igen wässrigen Methacrylamid-Lösung |
| 23,5 g | Acrylsäure |
| 126,6 g | Styrol und |
| 97,2 g | n-Butylacrylat |

mit konstant gleichbleibendem Mengenstrom zudosiert. Nach Ende des Zulaufes wurde die Zulaufleitung mit 28,8 g entionisiertem Wasser gespült anschließend innerhalb von 15 Minuten 28,9 g einer 25 gew.-%igen wässrigen Ammoniaklösung zudosiert wobei sich im wässrigen Polymerisationsgemisch ein pH-Wert von 8,1 einstellte. Anschließend wurde über 70 Minuten eine Monomeremulsion bestehend aus

| | |
|---|---|
| 96,0 g | entionisiertem Wasser |
| 1,1 g | einer 45 gew.-%igen wässrigen Dodecyldiphenyletherdisulfonsäurenatriumsalz-Lösung |
| 8,6 g | einer 28 gew.-%igen wässrigen Natriumlaurylpolyethoxysulfat-Lösung |
| 29,9 g | einer 15 gew.-%igen wässrigen Methacrylamid-Lösung |
| 4,5 g | Isopropenyl-2-oxazolin |
| 122,0 g | Styrol und |

(fortgesetzt)

| | |
|---|---|
| 97,2 g | n-Butylacrylat |

mit konstant gleichbleibendem Mengenstrom zudosiert. Nach Ende des Zulaufes wurde das Polymerisationsgemisch noch für 15 Minuten bei Reaktionstemperatur nachpolymerisiert und die Temperatur anschließend auf 75 °C gesenkt. Nach Erreichen der 75 °C wurden innerhalb von 60 Minuten zeitgleich beginnend 4,8 g einer 10 gew.-%igen wässrigen tert.-Butylhydroperoxid-Lösung und 3,3 g einer 13 gew.-%igen wässrigen Acetonbisulfit-Lösung über separate Zuläufe mit konstant gleichbleibenden Mengenströmen zudosiert. Nach Abkühlen auf Raumtemperatur und der Zugabe von 28,8 g entionisiertem Wasser erhielt man eine wässrige Polymerdispersion mit einem Feststoffgehalt von 40 Gew.-%, einem pH-Wert von 8,8. Die Glasübergangstemperatur der Dispersion wurde zu 35,5 °C bestimmt.

Polymerdispersion 3 (PD3)

In einen 2 L-Reaktor mit Ankerrührer wurden unter Stickstoffatmosphäre 9,0 g einer 33 gew.-%igen wässrigen Polystyrolsaat (gewichtsmittlerer Teilchendurchmesser 30 nm) und 361,4 g entionisiertes Wasser gefüllt und aufgeheizt. Nach Erreichen einer Innentemperatur von 75 °C wurden 11,3 g einer 7 gew.-%igen wässrigen Natriumperoxodisulfatlösung zugegeben und für 5 Minuten bei ansteigender Temperatur gerührt. Anschließend wurden nach Erreichen der Reaktionstemperatur von 95 °C der pH-Wert zu 3,7 bestimmt und dann 26,4 g der 7 gew.-% igen wässrigen Natriumperoxodisulfatlösung über 145 Minuten mit konstant gleich bleibendem Mengenstrom zudosiert. Zeitgleich beginnend wurde während 70 Minuten eine Monomeremulsion bestehend aus

| | |
|---|---|
| 96,0 g | entionisiertem Wasser |
| 16,0 g | einer 3 gew.-%igen wässrigen Natriumpyrophosphatlösung |
| 1,1 g | einer 45 gew.-%igen wässrigen Dodecyldiphenyletherdisulfonsäurenatriumsalz-Lösung |
| 8,6 g | einer 28 gew.-%igen wässrigen Natriumlaurylpolyethoxysulfat-Lösung |
| 29,9 g | einer 15 gew.-%igen wässrigen Methacrylamid-Lösung |
| 14,4 g | Acrylsäure |
| 135,7 g | Styrol und |
| 97,2 g | n-Butylacrylat |

mit konstant gleichbleibendem Mengenstrom zudosiert. Nach Ende des Zulaufes wurde die Zulaufleitung mit 28,8 g entionisiertem Wasser gespült anschließend innerhalb von 15 Minuten 12,6 g einer 25 gew.-%igen wässrigen Ammoniaklösung zudosiert wobei sich im wässrigen Polymerisationsgemisch ein pH-Wert von 8,0 einstellte. Anschließend wurde über 70 Minuten eine Monomeremulsion bestehend aus

| | |
|---|---|
| 96,0 g | entionisiertem Wasser |
| 1,1 g | einer 45 gew.-%igen wässrigen Dodecyldiphenyletherdisulfonsäurenatriumsalz-Lösung |
| 8,6 g | einer 28 gew.-%igen wässrigen Natriumlaurylpolyethoxysulfat-Lösung |
| 29,9 g | einer 15 gew.-%igen wässrigen Methacrylamid-Lösung |
| 2,8 g | Isopropenyl-2-oxazolin |
| 123,7 g | Styrol und |
| 97,2 g | n-Butylacrylat |

mit konstant gleichbleibendem Mengenstrom zudosiert. Nach Ende des Zulaufes wurde das Polymerisationsgemisch noch für 15 Minuten bei Reaktionstemperatur nachpolymerisiert und die Temperatur anschließend auf 75 °C gesenkt. Nach Erreichen der 75 °C wurden innerhalb von 60 Minuten zeitgleich beginnend 4,8 g einer 10 gew.-%igen wässrigen tert.-Butylhydroperoxid-Lösung und 3,3 g einer 13 gew.-%igen wässrigen Acetonbisulfit-Lösung über separate Zuläufe mit konstant gleichbleibenden Mengenströmen zudosiert. Nach Abkühlen auf Raumtemperatur und der Zugabe von 28,8 g entionisiertem Wasser erhielt man eine wässrige Polymerdispersion mit einem Feststoffgehalt von 40 Gew.-%, einem pH-Wert von 9,2. Die Glasübergangstemperatur der Dispersion wurde zu 35,5 °C bestimmt.

Polymervergleichsdispersion 1 (PV1)

Die Herstellung der Polymervergleichsdispersion 1 erfolgte analog der Herstellung der Polymerdispersion 1

mit dem Unterschied, dass lediglich 257,7 g anstelle von 327,4 g entionisiertes Wasser im Polymerisationsgefäß vorgelegt wurden und die Monomerenemulsion der ersten Polymerisationsstufe folgende Zusammensetzung aufwies:

| | |
|---|---|
| 18,3 g | einer 3 gew.-%igen wässrigen Natriumpyrophosphatlösung |
| 1,2 g | einer 45 gew.-%igen wässrigen Dodecyldiphenyletherdisulfonsäurenatriumsalz-Lösung |
| 9,8 g | einer 28 gew.-%igen wässrigen Natriumlaurylpolyethoxysulfat-Lösung |
| 181,0 g | einer 15 gew.-%igen wässrigen Methacrylamid-Lösung |
| 147,5 g | Styrol und |
| 111,4 g | n-Butylacrylat |

Man erhielt eine wässrige Polymerdispersion mit einem Feststoffgehalt von 42 Gew.-%, einem pH-Wert von 9,2. Die Glasübergangstemperatur der Dispersion wurde zu 32,7 °C bestimmt.

Polymervergleichsdispersion 2 (PV2)

Die Herstellung der Polymervergleichsdispersion 2 erfolgte analog der Herstellung der Polymerdispersion 1 mit dem Unterschied, dass die Monomerenemulsion der ersten Polymerisationsstufe folgende Zusammensetzung:

| | |
|---|---|
| 84,1 g | entionisiertem Wasser |
| 18,3 g | einer 3 gew.-%igen wässrigen Natriumpyrophosphatlösung |
| 1,2 g | einer 45 gew.-%igen wässrigen Dodecyldiphenyletherdisulfonsäurenatriumsalz-Lösung |
| 9,8 g | einer 28 gew.-%igen wässrigen Natriumlaurylpolyethoxysulfat-Lösung |
| 32,3 g | Acrylsäure |
| 147,5 g | Styrol und |
| 111,4 g | n-Butylacrylat |

und die Monomerenstufe der zweiten Polymerisationsstufe folgende Zusammensetzung aufwies:

| | |
|---|---|
| 84,2 g | entionisiertem Wasser |
| 18,3 g | einer 3 gew.-%igen wässrigen Natriumpyrophosphatlösung |
| 1,2 g | einer 45 gew.-%igen wässrigen Dodecyldiphenyletherdisulfonsäurenatriumsalz-Lösung |
| 9,8 g | einer 28 gew.-%igen wässrigen Natriumlaurylpolyethoxysulfat-Lösung |
| 34,3 g | einer 15 gew.-%igen wässrigen Methacrylamid-Lösung |
| 5,2 g | Isopropenyl-2-oxazolin |
| 142,3 g | Styrol und |
| 111,4 g | n-Butylacrylat |

Man erhielt eine wässrige Polymerdispersion mit einem Feststoffgehalt von 42 Gew.-%, einem pH-Wert von 9,2. Die Glasübergangstemperatur der Dispersion wurde zu 33,7 °C bestimmt.

Anwendungstechnische Prüfungen

Für die anwendungstechnischen Prüfungen wurden die vorgenannten Polymerdispersionen PD1 bis PD3 sowie die Polymervergleichsdispersionen PV1 und PV2 bei Raumtemperatur durch homogenes Mischen mit entionisiertem Wasser auf einen Feststoffgehalt von 10,0 Gew.-% verdünnt.

Zur Herstellung der imprägnierten Filterpapiere wurde als Rohpapier ein Cellulose-Filterpapier mit einem Flächengewicht von 103 g/m$^2$ verwendet. Zum Aufbringen der verdünnten wässrigen Polymerdisperionen (Imprägnierung) wurden die Papierbögen in Längsrichtung über ein Endlos-PES-Siebband mit einer Bandlaufgeschwindigkeit von 2,0 m pro Minute jeweils durch 10,0 gew.-%igen wässrige Polymerdispersionen geleitet. Durch anschließende Absaugung der wässrigen Polymerdispersionen wurde der Nassauftrag auf 206 g/m$^2$ (entsprechend 20,6) g/m$^2$ Bindemittel als Feststoff gerechnet) eingestellt. Die so erhaltenen imprägnierten Filterpapiere wurden in einem Mathis-Ofen auf einem Kunststoffnetz als Träger für 5 Minuten bei 90 °C bei maximalem Heißluftstrom getrocknet und direkt im Anschluss daran in einem Mathis-Ofen für eine Minute bei 160° C bei maximalem Heißluftstrom vernetzt und anschließend auf Raumtemperatur abgekühlt.

Bestimmung Nassreißfestigkeit

Aus den imprägnierten Papierbögen wurden längs und quer zur Laufrichtung jeweils 5 Prüfkörper in Hantelform von 115 mm Länge mit einem Prüfsteg von 6 mm Breite ausgestanzt. Die erhaltenen Prüfkörper wurden anschließend für 24 Stunden bei 23 °C und 50 % relativer Luftfeuchtigkeit im Klimaraum gelagert.

Zur Bestimmung der Nassreißfestigkeit wurden die Prüfkörper für 2 Minuten in 2 gew.-% ger wässriger Lösung eines Natrium-alkyl-sulfonates (Emulgator® E 30 der Firma Leuna Tenside GmbH) gelagert und danach die überschüssige wässrige Lösung mit einem Baumwollgewebe abgetupft. Die Bestimmung der Nassreißfestigkeit erfolgte an einer Zugprüfmaschine der Firma Zwick-Roell, Typ Z005. Die Prüfkörper wurden dabei so senkrecht in eine Spannvorrichtung eingebracht, dass die freie Einspannlänge 70 mm betrug. Daran anschließend wurden die eingespannten Prüfkörper mit einer Geschwindigkeit von 50 mm pro Minute in entgegengesetzter Richtung bis zum Riss der Prüfkörper auseinander gezogen. Die Angabe der Reißfestigkeit erfolgt in $N/mm^2$. Je höher die beim Riss der Prüfkörper gemessene Reißfestigkeit ist, desto besser ist die entsprechende Reißfestigkeit zu bewerten. Es erfolgten jeweils 5 Messungen in Längs- und Querrichtung. Die in der Tabelle 1 angegebenen Werte stellen jeweils den Mittelwert dieser Messungen dar.

Bestimmung des Berstdrucks, nass

Die Bestimmung des Berstdruckes, nass, erfolgte ebenfalls an einer Prüfmaschine der Firma Zwick-Roell, Typ Z005 mit dem Prüfmodul Berstdruck.

Dabei wurde eine Membran mit einer Dicke von 0,86 mm verwendet, die sich bei einem Druck von 30 kPa um 9,0 mm aufwölbt; die Fördermenge des Hydrauliksystems betrug 95 ml/min (DIN ISO 2758 und DIN ISO 2759, Software TestXpert der Fa. Zwick).

Aus den zu prüfenden imprägnierten Papieren wurden Prüfkörper von 175 x 230 mm ausgeschnitten. Anschließend wurden die Prüfkörper für 24 Stunden im Klimaraum bei 23 °C und 50 % relativer Luftfeuchtigkeit gelagert. Daran anschließend wurden die Prüfkörper ebenfalls für 2 Minuten in 2 gew.-%ger wässriger Lösung von Emulgator® E 30 gelagert und danach die überschüssige wässrige Lösung mit einem Baumwollgewebe abgetupft. Die so erhaltenen feuchten Prüfkörper wurden dann so über die elastische, kreisförmige Membran eingespannt, dass sie sich mit der Membran aufwölben konnten. Die Membran wurde mit gleichmäßiger Fördermenge der hydraulischen Flüssigkeit so lange aufgewölbt bis der entsprechende Prüfkörper barst, wobei der maximal zum Bersten aufgewandte Druck als Berstdruck, nass, bezeichnet wird. Es wurden jeweils 5 Einzelmessungen durchgeführt. Die in Tabelle 1 angegebenen Werte stellen die Mittelwerte aus diesen 5 Einzelmessungen dar. Dabei sind die Prüfergebnisse umso besser zu bewerten, je höher der entsprechende Berstdruck war.

Ermittlung der Elektrolytstabilität

Die Bestimmung der Elektrolytstabilität erfolgte dergestalt, dass ein Tropfen der jeweiligen (unverdünnten) Polymerdispersion bei Raumtemperatur in eine 0,1 gew.-%ige wässrige CalciumchloridLösung getropft wurde. Dabei wurde die Elektrolytstabilität der wässrigen Polymerdispersionen visuell bewertet, wobei eine Koagulation der Polymeren als negativ und eine homogene Verteilung der Polymeren als positiv bewertet wurde. Die entsprechend erhaltenen Bewertungen sind ebenfalls in Tabelle 1 aufgelistet.

Tabelle 1: Nassreißfestigkeiten und Berstdrücke der entsprechenden Prüfkörper sowie Elektrolytbeständigkeit der entsprechenden Polymerdispersionen

| Polymerdispersionen | PV1 | PV2 | PD1 | PD2 | PD3 |
|---|---|---|---|---|---|
| Nassreißfestigkeit | | | | | |
| längs ($N/mm^2$) | 0,6 | 1,6 | 2,2 | 3,2 | 2,7 |
| quer ($N/mm^2$) | 0,4 | 1,3 | 1,7 | 2,4 | 2,0 |
| Berstdruck | | | | | |
| nass (kPa) | 51 | 102 | 114 | 158 | 141 |
| Elektrolytstabilität | positiv | negativ | positiv | positiv | positiv |

Aus den Ergebnissen ist klar ersichtlich, dass die erfindungsgemäßen Polymerdispersionen PD1 bis PD3 sowohl verbesserte Nassreißfestigkeiten wie auch Berstdrücke aufweisen. Aus den Ergebnissen wird auch klar, dass sich die carbonsäureamidgruppenhaltigen Monomeren vorteilhaft auf die Elektrolytstabilität der entsprechenden Polymerdispersionen auswirken.

## Patentansprüche

1. **1.** Verfahren zur Herstellung einer wässrigen Polymerdispersion durch radikalisch initiierte wässrige Emulsionspolymerisation, wobei in einem wässrigen Polymerisationsmedium

   a) in einer ersten Polymerisationsstufe

   ≥ 0,1 und ≤ 15 Gew.-% wenigstens einer α,β-monoethylenisch ungesättigten Verbindung mit wenigstens einer Säuregruppe (Monomere A1),
   > 0 und ≤ 10 Gew.-% wenigstens einer monoethylenisch ungesättigten Verbindung mit wenigstens einer Carbonsäureamidgruppe (Monomere A2),
   ≥ 75 und ≤ 99,9 Gew.-% wenigstens einer ethylenisch ungesättigten Verbindung, welche sich von den Monomeren A1, A2 und B1 unterscheidet (Monomere A3),

   wobei sich die Mengen der Monomeren A1 bis A3 auf 100 Gew.-% aufsummieren, radikalisch zu einem Polymer A polymerisiert werden, danach in Anwesenheit des Polymers A
   b) in einer zweiten Polymerisationsstufe

   ≥ 0,1 und ≤ 20 Gew.-% wenigstens einer monoethylenisch ungesättigten Verbindung mit wenigstens einer Oxazolingruppe (Monomere B1),
   >0 und ≤ 10 Gew.-% wenigstens einer monoethylenisch ungesättigten Verbindung mit wenigstens einer Carbonsäureamidgruppe (Monomere B2),
   ≥ 70 und ≤ 99,9 Gew.-% wenigstens einer ethylenisch ungesättigten Verbindung, welche sich von den Monomeren A1, B1 und B2 unterscheidet (Monomere B3),

   wobei sich die Mengen der Monomeren B1 bis B3 auf 100 Gew.-% aufsummieren, radikalisch polymerisiert werden,

   mit der Maßgabe, dass

   • das Gewichtsverhältnis der Summe der Gesamtmengen an Monomeren A1 bis A3 (Gesamtmonomerenmenge A) zur Summe der Gesamtmengen an Monomeren B1 bis B3 (Gesamtmonomerenmenge B) im Bereich 1:9 bis 9:1 liegt,
   • der pH-Wert des wässrigen Polymerisationsgemisches während der ersten Polymerisationsstufe < 5 beträgt und danach
   • vor Beginn der zweiten Polymerisationsstufe der pH-Wert des wässrigen Polymerisationsgemisches durch Zugabe einer Base auf einen Wert > 6 erhöht wird,

   **dadurch gekennzeichnet, dass** die Summe der Gesamtmengen an Monomeren A2 und Monomeren B2 ≥ 0,1 und ≤ 10 Gew.-%, bezogen auf die Summe aus Gesamtmonomerenmenge A und Gesamtmonomerenmenge B (Gesamtmonomerenmenge) beträgt.

**2.** Verfahren nach Anspruch 1, **dadurch gekennzeichnet, dass** die Monomeren A1 wenigstens eine Carbonsäuregruppe und/oder Phosphorsäuregruppe aufweisen.

**3.** Verfahren nach Anspruch 1 oder 2, **dadurch gekennzeichnet, dass** als Monomeren A1 Acrylsäure, Methacrylsäure, Itaconsäure, Maleinsäure, Fumarsäure, Crotonsäure, Vinylessigsäure, Vinylmilchsäure, Vinylphosphonsäure und/oder (Meth)acryloxy(poly)alkoxyphosphat eingesetzt werden.

**4.** Verfahren nach einem der Ansprüche 1 bis 3, **dadurch gekennzeichnet, dass** die Monomeren B1 ausgewählt sind aus Verbindungen der allgemeinen Formel II

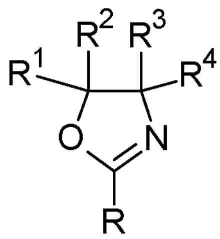

Formel (II),

wobei die Reste die folgenden Bedeutungen haben:

R ist ein $C_{2-20}$-Alkenylrest mit einer ethylenisch ungesättigten Gruppe;
$R^1$, $R^2$, $R^3$, $R^4$ sind unabhängig voneinander ausgewählt aus Wasserstoff, Halogen, $C_{1-20}$-Alkyl, $C_{2-20}$-Alkenyl, $C_{6-20}$-Aryl, $C_{7-32}$-Arylalkyl, $C_{1-20}$-Hydroxyalkyl, $C_{1-20}$-Aminoalkyl und $C_{1-20}$-Haloalkyl.

**5.** Verfahren nach einem der Ansprüche 1 bis 4, **dadurch gekennzeichnet, dass** als Monomeren B1 2-Vinyl-2-oxazolin, 2-Vinyl-4-methyl-2-oxazolin, 2-Vinyl-5-methyl-2-oxazolin, 2-Vinyl-4-ethyl-2-oxazolin, 2-Vinyl-4,4-dimethyl-2-oxazolin, 2-Vinyl-5,5-dimethyl-2-oxazolin, 2-Vinyl-4,4,5,5-teramethyl-2-oxazolin, 2-Isopropenyl-2-oxazolin, 2-Isopropenyl-4-methyl-2-oxazolin, 2-Isopropenyl-5-methyl-2-oxazolin, 2-Isopropenyl-4-ethyl-2-oxazolin, 2-Isopropenyl-5-ethyl-2-oxazolin, 2-Isopropenyl-4,4-dimethyl-2-oxazolin, 2-Isopropenyl-5,5-dimethyl-2-oxazolin und/oder 2-Isopropenyl-4,4,5,5-teramethyl-2-oxazolin eingesetzt werden.

**6.** Verfahren nach einem der Ansprüche 1 bis 5, **dadurch gekennzeichnet, dass** als Monomere A2 und/oder B2 Acrylamid und/oder Methacrylamid eingesetzt wird.

**7.** Verfahren nach einem der Ansprüche 1 bis 6, **dadurch gekennzeichnet, dass** die Gesamtmenge der Monomeren A1 $\geq$ 4,0 und $\leq$ 12 Gew.-%, bezogen auf die Gesamtmonomerenmenge A beträgt.

**8.** Verfahren nach einem der Ansprüche 1 bis 7, **dadurch gekennzeichnet, dass** die Gesamtmenge der Monomeren B1 $\geq$ 0,5 und $\leq$ 5,0 Gew.-%, bezogen auf die Gesamtmonomerenmenge B beträgt.

**9.** Verfahren nach einem der Ansprüche 1 bis 8, **dadurch gekennzeichnet, dass** die Summe der Gesamtmengen an Monomeren A2 und Monomeren B2 $\geq$ 1,0 und $\leq$ 3,0 Gew.-%, bezogen auf die Gesamtmonomerenmenge beträgt.

**10.** Verfahren nach einem der Ansprüche 1 bis 9, **dadurch gekennzeichnet, dass** das Gewichtsverhältnis von Gesamtmonomerenmenge A zur Gesamtmonomerenmenge B im Bereich 1:2 bis 2:1 liegt.

**11.** Verfahren nach einem der Ansprüche 1 bis 10, **dadurch gekennzeichnet, dass** die Gesamtmenge der Monomeren A1 in der ersten Polymerisationsstufe und die Gesamtmenge der Monomeren B1 in der zweiten Polymerisationsstufe so gewählt werden, dass das molare Verhältnis von Säuregruppen zu Oxazolingruppen $\geq$ 5 beträgt.

**12.** Verfahren nach einem der Ansprüche 1 bis 11, **dadurch gekennzeichnet, dass** die zur pH-Werterhöhung vor der zweiten Polymerisationsstufe eingesetzte Base einen Siedepunkt von $\leq$ 20 °C bei einem Druck von 1,013 bar (absolut) aufweist.

**13.** Verfahren nach einem der Ansprüche 1 bis 12, **dadurch gekennzeichnet, dass** Art und Menge der Monomeren A1 bis A3 und/oder Monomeren B1 bis B3 so gewählt werden, dass ein allein aus diesen Monomeren aufgebautes Polymerisat eine Glasübergangstemperatur im Bereich $\geq$ -15 und $\leq$ 100 °C aufweist.

**14.** Wässrige Polymerdispersion erhältlich nach einem Verfahren gemäß einem der vorgenannten Ansprüche.

**15.** Verwendung einer wässrigen Polymerdispersion gemäß Anspruch 14 als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

**16.** Verwendung einer wässrigen Polymerdispersion gemäß Anspruch 14 zur Verbesserung der Reißfestigkeit von

Faservliesen unter Wärmeeinwirkung sowie zur Erhöhung des Berstdruckes bei Filterpapieren unter nassen Bedingungen.

## Claims

1. A process for the preparation of an aqueous polymer dispersion by aqueous emulsion polymerization initiated by free radicals, wherein in an aqueous polymerization medium

    a) in a first polymerization stage

    ≥ 0.1 and ≤ 15 wt. % of at least one α,β-monoethylenically unsaturated compound having at least one acid group (monomers A1),
    > 0 and ≤ 10 wt.% of at least one monoethylenically unsaturated compound having at least one carboxylic acid amide group (monomers A2),
    ≥ 75 and ≤ 99.9 wt.% of at least one ethylenically unsaturated compound which differs from monomers A1, A2 and B1 (monomers A3),

    wherein the amounts of monomers A1 to A3 total 100 wt.%, are subjected to free radical polymerization to give a polymer A, thereafter in the presence of polymer A
    b) in a second polymerization stage

    ≥ 0.1 and ≤ 20 wt.% of at least one monoethylenically unsaturated compound having at least one oxazoline group (monomers B1),
    > 0 and ≤ 10 wt.% of at least one monoethylenically unsaturated compound having at least one carboxylic acid amide group (monomers B2),
    ≥ 70 and ≤ 99.9 wt.% of at least one ethylenically unsaturated compound which differs from monomers A1, B1 and B2 (monomers B3),

    wherein the amounts of monomers B1 to B3 total 100 wt.%, are subjected to free radical polymerization, with the proviso that

    • the weight ratio of the sum of the total amounts of monomers A1 to A3 (total monomer amount A) to the sum of the total amounts of monomers B1 to B3 (total monomer amount B) is in the range of 1:9 to 9:1,
    • the pH of the aqueous polymerization mixture during the first polymerization stage is < 5 and thereafter
    • before the start of the second polymerization stage the pH of the aqueous polymerization mixture is increased to > 6 by addition of a base,

    wherein the sum of the total amounts of monomers A2 and monomers B2 is ≥ 0.1 and ≤ 10 wt.%, based on the sum of total monomer amount A and total monomer amount B (total monomer amount).

2. The process according to claim 1, wherein the monomers A1 have at least one carboxylic acid group and/or phosphoric acid group.

3. The process according to claim 1 or 2, wherein acrylic acid, methacrylic acid, itaconic acid, maleic acid, fumaric acid, crotonic acid, vinylacetic acid, vinyllactic acid, vinylphosphonic acid and/or (meth)acryloxy (poly)alkoxy phosphate are employed as monomers A1.

4. The process according to one of claims 1 to 3, wherein the monomers B1 are selected from compounds of the general formula II

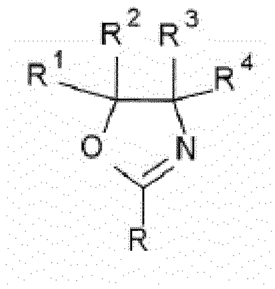
formula (II)

wherein the radicals have the following meanings:

R is a $C_{2-20}$-alkenyl radical having an ethylenically unsaturated group;
$R^1$, $R^2$, $R^3$, $R^4$ are selected independently of each other from hydrogen, halogen, $C_{1-20}$-alkyl, $C_{2-20}$-alkenyl, $C_{6-20}$-aryl, $C_{7-32}$-arylalkyl, $C_{1-20}$-hydroxyalkyl, $C_{1-20}$-aminoalkyl and $C_{1-20}$-haloalkyl.

**5.** The process according to one of claims 1 to 4, wherein 2-vinyl-2-oxazoline, 2-vinyl-4-methyl-2-oxazoline, 2-vinyl-5-methyl-2-oxazoline, 2-vinyl-4-ethyl-2-oxazoline, 2-vinyl-4,4-dimethyl-2-oxazoline, 2-vinyl-5,5-dimethyl-2-oxazoline, 2-vinyl-4,4,5,5-tetramethyl-2-oxazoline, 2-isopropenyl-2-oxazoline, 2-isopropenyl-4-methyl-2-oxazoline, 2-isopropenyl-5-methyl-2-oxazoline, 2-isopropenyl-4-ethyl-2-oxazoline, 2-isopropenyl-5-ethyl-2-oxazoline, 2-isopropenyl-4,4-dimethyl-2-oxazoline, 2-isopropenyl-5,5-dimethyl-2-oxazoline and/or 2-isopropenyl-4,4,5,5-teramethyl-2-oxazoline are employed as monomers B1.

**6.** The process according to one of claims 1 to 5, wherein acrylamide and/or methacrylamide is employed as monomers A2 and/or B2.

**7.** The process according to one of claims 1 to 6, wherein the total amount of monomers A1 is ≥ 4.0 and ≤ 12 wt.%, based on the total monomer amount A.

**8.** The process according to one of claims 1 to 7, wherein the total amount of monomers B1 is ≥ 0.5 and ≤ 5.0 wt.%, based on the total monomer amount B.

**9.** The process according to one of claims 1 to 8, wherein the sum of the total amounts of monomers A2 and monomers B2 is ≥ 1.0 and ≤ 3.0 wt.%, based on the total monomer amount.

**10.** The process according to one of claims 1 to 9, wherein the weight ratio of the total monomer amount A to the total monomer amount B is in the range of 1:2 to 2:1.

**11.** The process according to one of claims 1 to 10, wherein the total amount of monomers A1 in the first polymerization stage and the total amount of monomers B1 in the second polymerization stage are chosen such that the molar ratio of acid groups to oxazoline groups is ≥ 5.

**12.** The process according to one of claims 1 to 11, wherein the base employed for increasing the pH before the second polymerization stage has a boiling point of ≤ 20 °C under a pressure of 1.013 bar (absolute).

**13.** The process according to one of claims 1 to 12, wherein the nature and amount of monomers A1 to A3 and/or monomers B1 to B3 are chosen such that a polymer built up solely from these monomers has a glass transition temperature in the range of ≥ -15 and ≤ 100 °C.

**14.** An aqueous polymer dispersion obtainable by a process according to one of the preceding claims.

**15.** The use of an aqueous polymer dispersion according to claim 14 as a binder in the preparation of adhesives, sealing compositions, synthetic resin plasters, paper coating compositions, fiber nonwovens, flexible roof coatings and paints and in the hardening of sand, as components in the preparation of textile or leather auxiliaries and impact modifiers or for modification of mineral binders and synthetic materials.

**16.** The use of an aqueous polymer dispersion according to claim 14 for improving the tear strength of fiber nonwovens

under the action of heat and for increasing the bursting pressure of filter papers under wet conditions.

## Revendications

**1.** Procédé de préparation d'une dispersion aqueuse de polymères par polymérisation en émulsion aqueuse à amorçage radicalaire, dans lequel, dans un milieu aqueux de polymérisation,

a) dans une première étape de polymérisation, on polymérise par polymérisation radicalaire pour obtenir un polymère A

≥ 0,1 à ≤ 15 % en poids d'au moins un composé à insaturation $\alpha,\beta$-monoéthylénique ayant au moins un groupe acide (monomère A1),
> 0 et ≤ 10 % en poids d'au moins un composé à insaturation monoéthylénique ayant au moins un groupe carboxamide (monomère A2),
≥ 75 à ≤ 99,9 % en poids d'au moins un composé à insaturation éthylénique différent des monomères A1, A2 et B1 (monomère A3),

la somme des quantités des monomères A1 à A3 étant de 100 % en poids,
puis, en présence du polymère A
b) dans une seconde étape de polymérisation, on polymérise par polymérisation radicalaire

≥ 0,1 à ≤ 20 % en poids d'au moins un composé à insaturation monoéthylénique ayant au moins un groupe oxazoline (monomère B1),
> 0 et ≤ 10 % en poids d'au moins un composé à insaturation monoéthylénique ayant au moins un groupe carboxamide (monomère B2),
≥ 70 et ≤ 99,9 % en poidsd'au moins un composé à insaturation éthylénique différent des monomères A1, B1 et B2 (monomère B3),

la somme des quantités des monomères B1 à B3 étant de 100 % en poids,
à la condition que

• le rapport en poids de la somme des quantités totales des monomères A1 à A3 (quantité totale des monomères A) à la somme des quantités totales des monomères B1 à B3 (quantité totale des monomères B) soit compris dans la plage de 1:9 à 9:1,
• le pH du mélange aqueux de polymérisation soit, au cours de la première étape de polymérisation, soit < 5, puis
• avant le début de la seconde étape de polymérisation, le pH du mélange aqueux de polymérisation soit augmenté à une valeur > 6 par addition d'une base,

**caractérisé en ce que** la somme des quantités totales des monomères A2 et des monomères B2 est ≥ 0,1 et ≤ 10 % en poids par rapport à la somme de la quantité totale des monomères A et de la quantité totale des monomères B (quantité totale des monomères).

**2.** Procédé selon la revendication 1, **caractérisé en ce que** les monomères A1 comportent au moins un groupe acide carboxylique et/ou un groupe acide phosphonique.

**3.** Procédé selon la revendication 1 ou 2, **caractérisé en ce qu'**on utilise en tant que monomères A1 l'acide acrylique, l'acide méthacrylique, l'acide itaconique, l'acide maléique, l'acide fumarique, l'acide crotonique, l'acide vinylacétique, l'acide vinyllactique, l'acide vinylphosphonique et/ou un (méth)acryloxy(poly)alcoxyphosphate.

**4.** Procédé selon l'une des revendications 1 à 3, **caractérisé en ce que** les monomères B1 sont choisis parmi les composés de Formule générale II

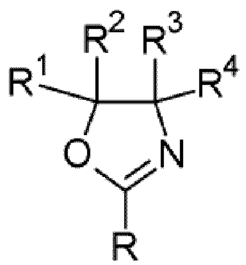

Formule (II)

dans laquelle les radicaux ont les significations suivantes :

R représente un radical alcényle en $C_{2-20}$ ayant un groupe à insaturation éthylénique ;
$R^1$, $R^2$, $R^3$, $R^4$ sont choisis indépendamment les uns des autres parmi un hydrogène, un halogène, un alkyle en $C_{1-20}$, un alcényle en $C_{2-20}$, un aryle en $C_{6-20}$, un arylalkyle en $C_{7-32}$, un hydroxyalkyle en $C_{1-20}$, un aminoalkyle en $C_{1-20}$ et un halogénoalkyle en $C_{1-20}$.

5. Procédé selon l'une des revendications 1 à 4, **caractérisé en ce qu'**on utilise en tant que monomères B1 la 2-vinyl-2-oxazoline, la 2-vinyl-4-méthyl-2-oxazoline, la 2-vinyl-5-méthyl-2-oxazoline, la 2-vinyl-4-éthyl-2-oxazoline, la 2-vinyl-4,4-diméthyl-2-oxazoline, la 2-vinyl-5,5-diméthyl-2-oxazoline, la 2-vinyl-4,4,5,5-tétraméthyl-2-oxazoline, la 2-isopropényl-2-oxazoline, la 2-isopropényl-4-méthyl-2-oxazoline, la 2-isopropényl-5-méthyl-2-oxazoline, la 2-isopropényl-4-éthyl-2-oxazoline, la 2-isopropényl-5-éthyl-2-oxazoline, la 2-isopropényl-4,4-diméthyl-2-oxazoline, la 2-isopropényl-5,5-diméthyl-2-oxazoline et/ou la 2-isopropényl-4,4,5,5-tétraméthyl-2-oxazoline.

6. Procédé selon l'une des revendications 1 à 5, **caractérisé en ce qu'**on utilise en tant que monomère A2 et/ou B2 l'acrylamide et/ou le méthacrylamide.

7. Procédé selon l'une des revendications 1 à 6, **caractérisé en ce que** la quantité totale des monomères A1 est ≥ 4,0 et ≤ 12 % en poids par rapport à la quantité totale des monomères A.

8. Procédé selon l'une des revendications 1 à 7, **caractérisé en ce que** la quantité totale des monomères B1 est ≥ 0,5 et ≤ 5,0 % en poids par rapport à la quantité totale des monomères B.

9. Procédé selon l'une des revendications 1 à 8, **caractérisé en ce que** la somme des quantités totales des monomères A2 et des monomères B2 est ≥ 1,0 et ≤ 3,0 % en poids par rapport à la quantité totale des monomères.

10. Procédé selon l'une des revendications 1 à 9, **caractérisé en ce que** le rapport en poids de la quantité totale des monomères A à la quantité totale des monomères B est compris dans la plage de 1:2 à 2:1.

11. Procédé selon l'une des revendications 1 à 10, **caractérisé en ce que** la quantité totale des monomères A1 dans la première étape de polymérisation et la quantité totale des monomères B1 dans la seconde étape de polymérisation sont choisies de façon que le rapport en moles des groupes acides aux groupes oxazoline soit ≥ 5.

12. Procédé selon l'une des revendications 1 à 11, **caractérisé en ce que** la base utilisée pour augmenter le pH avant la seconde étape de polymérisation présente un point d'ébullition ≤ 20 °C sous une pression absolue de 1 013 bar.

13. Procédé selon l'une des revendications 1 à 12, **caractérisé en ce que** la nature et la quantité des monomères A1 à A3 et/ou des monomères B1 à B3 sont choisies de façon qu'un polymère constitué uniquement de ces monomères présente une température de transition vitreuse comprise dans la plage ≥ -15 et ≤ 100 °C.

14. Dispersion aqueuse de polymères pouvant être obtenue par un procédé selon l'une des revendications précédentes.

15. Utilisation d'une dispersion aqueuse de polymères selon la revendication 14 en tant que liant lors de la fabrication d'adhésifs, de masses d'étanchéité, d'enduits à base de résine plastique, de masses de couchage du papier, de non-tissé de fibres, de revêtements souples de toit et de peintures, ainsi que pour la consolidation du sable, en tant que composant lors de la fabrication d'adjuvants textiles et pour le cuir, et en tant que modifiant choc ou pour modifier des liants minéraux et des matières plastiques.

**16.** Utilisation d'une dispersion aqueuse de polymères selon la revendication 14 pour améliorer la résistance à la déchirure de non-tissés de fibres sous l'action de la chaleur, et aussi pour augmenter la pression de rupture de papiers-filtres dans des conditions humides.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 176609 A
- EP 489941 A
- WO 2006112538 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A
- US 2520959 A
- US 3397165 A


### In der Beschreibung aufgeführte Nicht-Patentliteratur


- **ANONYMEN.** *Research Disclosure Publikation,* 1986, vol. 261, 23
- Emulsionspolymerisation in Encyclopedia of Polymer Science and Engineering. 1987, vol. 8, 659 ff
- **D.C. BLACKLEY.** *High Polymer Latices,* 1966, vol. 1, 35 ff
- **H. WARSON.** *The Applications of Synthetic Resin Emulsions,* 1972, 246 ff
- **D. DIEDERICH.** *Chemie in unserer,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **J. BRANDRUP ; E.H. IMMERGUT.** Polymerhandbook. John Weley & Sons, 1989, 133-141
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **T.G. FOX.** *Bull. Am. Phys. Soc.,* 1956, vol. 1, 123
- Ullmann's Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Ullmann's Cncyclopedia of Industrial Chemistry. Verlag Chemie, 1992, 169